# EUROPÄISCHE PATENTANMELDUNG

(11) **EP 2 050 557 A1**
(43) Veröffentlichungstag der Anmeldung: **22.04.2009**
(21) Anmeldenummer: 08017247.1
(22) Anmeldetag: 30.09.2008
(51) Int. Cl.: B29C 49/42, B65B 43/00, F16H 35/10

(54) **Maschine zum Formen von Behältern**

(30) Priorität: 19.10.2007 DE 102007050479
(71) Anmelder: Krones AG, 93073 Neutraubling (DE)
(72) Erfinder: Christiansen, Peter, 22453 Hamburg (DE)
(74) Vertreter: Grünecker, Kinkeldey, Stockmair & Schwanhäusser Anwaltssozietät

(57) **Zusammenfassung**

In einer Maschine zum Formen von Behältern, mit einem einen antreibbaren Rotor (1) enthaltenden Blasmodul (B) und einem einen antreibbaren Transporteur (3) enthaltenden, dem Blasmodul (B) zuliefernden Heizmodul (H), und einem beiden Modulen zugeordneten Hauptantrieb (2), der wahlweise im Dauerbetrieb oder im Taktbetrieb betreibbar ist, ist im Antriebsstrang zwischen dem Rotor (1) und dem Transporteur (3) eine wahlweise schaltbare Entkopplung (E) vorgesehen, und ist für den bei geschalteter Entkopplung (E) vom Hauptantrieb (2) separierten Antriebsstrang-Teil (10) ein wahlweise zuschaltbarer Hilfsantrieb (A) vorgesehen.

## Beschreibung

Die Erfindung betrifft eine Maschine gemäß Oberbegriff des Patentanspruchs 1.

Bei solchen aus der Praxis bekannten Maschinen (beispielsweise Contiform der Firma Krones AG) werden der Rotor des Blasmoduls und der Transporteur des Heizmoduls gemeinsam über einen Hauptantrieb angetrieben, der, da der Blasmodul einen höheren Leistungsbedarf hat, meist dem Blasmodul zugeordnet ist. Beim Einrichten bzw. Umrüsten der Maschine, oder nach einer Betriebsstörung entweder im Heizmodul oder im Blasmodul, müssen im Taktbetrieb Arbeiten im Blasmodul und/oder im Heizmodul ausgeführt werden. Beispielsweise müssen im Umrüst- oder Einrichtbetrieb im Blasmodul Formen gewechselt oder umgebaut und im Heizmodul Garniturenteile, wie Preformgreifer, Abschirmplatten, und dgl. gewechselt werden. Dabei müssen häufig im Blasmodul mit dem Rotor andere Positionen angefahren werden als mit dem Transporteur im Heizmodul. Schon aus diesem Grund werden solche Arbeiten am Blasmodul und am Heizmodul zeitlich versetzt ausgeführt, da sich Bediener wegen der Notwendigkeit, verschiedene Positionen anzufahren, gegenseitig behindern würden. Außerdem wäre die Betriebsgefahr hoch, wenn Bediener an beiden Modulen gleichzeitig arbeiteten und beim jeweiligen Weitertakten einander in Gefahr brächten. Ein weiterer Nachteil des bekannten Prinzips liegt darin, dass beispielsweise bei einer Störung in einer weiteren, vom Blasmodul belieferten Einrichtung, z.B. bei einer Blockage in einem nachgeschalteten Füller, sowohl der Rotor im Blasmodul als auch der Transporteur im Heizmodul angehalten werden müssen, bis die Blockage beseitigt wird. Die Preforms im Heizmodul können im Stillstand beschädigt werden, so dass nachfolgend zeitaufwändige Neueinricht-Arbeiten erforderlich werden. Außerdem wird im Taktbetrieb mit dem Hauptantrieb unnötig Leistung vergeudet, wenn der Hauptantrieb den Transporteur mitbewegt, während im Blasmodul gearbeitet wird, bzw. der Hauptantrieb auch den Rotor antreibt, wenn im Heizmodul gearbeitet wird. Der schwerwiegendste Nachteil liegt jedoch darin, dass insgesamt die Zeiten zum Einrichten oder Umrüsten und damit die Totzeiten der Maschine unzweckmäßig lang sind.

Der Erfindung liegt die Aufgabe zugrunde, eine Maschine der eingangs genannten Art dahingehend zu verbessern, dass bei hoher Betriebssicherheit Wechselzeiten beispielsweise im Einricht- oder Umrüstbetrieb verkürzt werden.

Die gestellte Aufgabe wird mit den Merkmalen des Patentanspruchs 1 gelöst.

Im Normalbetrieb ist der Hauptantrieb nach wie vor zum Bewegen des Rotors und des Transporteurs verantwortlich, solange die Entkopplung nicht geschaltet ist. Im Einricht- bzw. Umrüstbetrieb kann bei Bedarf jedoch die Entkopplung geschaltet werden, um die Antriebsstrang-Teile voneinander zu separieren. Der Hauptantrieb treibt bei geschalteter Entkopplung den Rotor, während dann der Hilfsantrieb den Transporteur antreibt. Bediener können gleichzeitig sowohl am Blasmodul als auch am Heizmodul arbeiten, so dass gleichzeitige und voneinander unabhängige Wechselvorgänge, beispielsweise von Heizmodul-Garniturenteilen und Blasmodul-Garniturenteilen, möglich sind. Im Resultat lassen sich die Wechselzeiten erheblich verkürzen. Besonders zweckmäßig kann der vom Hilfsantrieb angetriebene Transporteur im Heizmodul mit wenigstens einem Wechselautomaten bestückt werden, der gegebenenfalls mit dem Hilfsantrieb zusammenarbeitet, und zwar unabhängig davon, ob der Rotor im Blasmodul gerade angetrieben wird oder nicht. Es wird ferner Energie eingespart, da der Hauptantrieb bei geschalteter Entkopplung nur den Rotor im Blasmodul anzutreiben braucht, während der Hilfsantrieb mit relativ geringer Leistung für den mit geringem Leistungsbedarf zu bewegenden Transporteur ausgelegt sein kann. Der Sicherheitsstandard ist hoch, da trotz gleichzeitiger Arbeiten am Blasmodul und am Heizmodul die Betriebsgefahr für die jeweiligen Bediener gering ist. Bei einer Störung, beispielsweise in einer dem Blasmodul nachgeordneten Einrichtung, kann der Blasmodul gestoppt werden, während bei dann geschalteter Entkopplung der Transporteur weiter angetrieben wird, um Schäden an den Preforms im Heizmodul zu vermeiden.

Bei einer zweckmäßigen Ausführungsform ist der Hauptantrieb dem eine höhere Leistung erfordernden Blasmodul zugeordnet, während der Hilfsantrieb nur dem mit geringerer Antriebsleistung auskommenden Heizmodul zugeordnet wird, zweckmäßig nahe bei der Entkopplung. Der Hilfsantrieb braucht nicht notwendigerweise direkt an oder bei der Entkopplung angeordnet zu sein, sondern könnte auch an dafür geeigneter Stelle des Heizmoduls so angeordnet werden, dass er sich wahlweise mit dem Transporteur koppeln lässt, sobald die Entkopplung betätigt und die Antriebsstrang-Teile separiert sind.

Die Entkopplung lässt sich mit üblichen Mitteln gestalten, um einerseits die Antriebsstrang-Teile voneinander separieren und den Hilfsantrieb ankoppeln zu können. Zweckmäßig werden zwei wechselweise betätigbare Kupplungen vorgesehen, von denen die eine die Antriebsstrang-Teile miteinander verbindet und die andere den Hilfsantrieb abkoppelt, oder die andere den Hilfsantrieb zukoppelt, und die eine die Antriebsstrang-Teile separiert. Alternativ würde eine einzige Kupplung ausreichen, um die Antriebsstrang-Teile entweder miteinander zu koppeln oder voneinander zu separieren, wobei dann zwischen dem Hilfsantrieb und dem Transporteur ein Freilauf vorgesehen wird. Bei abgeschaltetem Hilfsantrieb und miteinander verbundenen Antriebsstrang-Teilen wird der Hilfsantrieb überholt. Hingegen kuppelt der Freilauf den Hilfsantrieb mit dem Transporteur, wenn der Hilfsantrieb eingeschaltet und die einzige Kupplung so betätigt ist, dass die Antriebsstrang-Teile separiert sind.

Um kurze Schaltzeiten und hohe Betriebssicherheit zu erzielen, kann die jeweilige Kupplung pneumatisch, hydraulisch, elektromagnetisch schaltbar sein. Bei einfachen

Ausführungsformen sind auch mechanisch betätigbare Kupplungen zweckmäßig.

Der Hilfsantrieb umfasst einen Elektro- oder Hydromotor, der, vorzugsweise, mit einem Getriebe kombiniert sein kann.

Der Hilfsantrieb ist zweckmäßig sowohl im Dauerbetrieb als auch im Taktbetrieb betreibbar.

Bei einer bevorzugten Ausführungsform ist in der Entkopplung eine mit dem Hauptantrieb verbundene Treibwelle für ein Antriebsrad des Transporteurs vorgesehen. Der Hilfsantrieb ist ebenfalls dem Antriebsrad zugeordnet. Zwischen dem Antriebsrad und der Treibwelle ist die eine Kupplung angeordnet, während zwischen dem Hilfsantrieb und dem Antriebsrad die andere Kupplung angeordnet wird. Durch wechselweises Ein- und Ausrücken der Kupplungen werden entweder die Antriebsstrang-Teile miteinander verbunden oder separiert, und der Hilfsantrieb zugeschaltet oder abgetrennt.

Alternativ kann die einzige Kupplung zwischen dem Antriebsrad und der Treibwelle angeordnet werden, während sich der Freilauf zwischen dem Hilfsantrieb und dem Antriebsrad befindet. Der Freilauf ist zweckmäßig so ausgebildet, dass er in der Bewegungsrichtung greift, in der der Hilfsantrieb den Transporteur zu treiben hat.

Um Einricht- bzw. Umrüstarbeiten ohne Zeitverzug durchführen zu können, kann es zweckmäßig sein, die Entkopplung vom Blasmodul und/oder vom Heizmodul her zu betätigen, oder auch mittels einer zentralen Steuerung.

Speziell für den Hilfsantrieb kann es zweckmäßig sein, eine tragbare Steuerung vorzusehen, die der jeweilige Bediener dorthin mitführen kann, wo er am Heizmodul zu arbeiten hat. Die Steuerung kann kabelgebunden oder, noch zweckmäßiger, sogar drahtlos operieren.

Bei einer zweckmäßigen Ausführungsform wird dem Heizmodul bzw. dessen Transporteur wenigstens ein Wechselautomat für Garniturenteile des Transporteurs zugeordnet. Der Wechselautomat ist zum automatischen Garniturenwechsel in Korrelation zum Betrieb des Hilfsantriebs betreibbar. Gegebenenfalls dient der Hilfsantrieb sogar als Antriebsquelle auch für den Wechselautomaten. Hierbei kann die Entkopplung mit zwei Kupplungen zweckmäßig sein, um den Transporteur vorwärts und/oder rückwärts anzutreiben und die für den Wechselautomaten erforderliche Position sehr genau und rasch anzufahren.

Bei einer konkreten Ausführungsform weist der Transporteur des Heizmoduls eine Dornkette für Preformgreifer auf. Die Dornkette ist bei betätigter Entkopplung vom Hilfsantrieb in einem getakteten Tippbetrieb antreibbar, so dass ein Bediener die Dornkette an die jeweils für einen Wechsel im Heizmodul richtige Position verfahren kann, unabhängig davon, in welche Position gerade der Rotor im Blasmodul zu bringen ist.

Bei einer zweckmäßigen Ausführungsform ist schließlich der Hilfsantrieb in beiden Drehrichtungen betreibbar, um Positionskorrekturen im Heizmodul bequemer ausführen zu können.

Anhand der Zeichnungen werden Ausführungsformen des Erfindungsgegenstandes erläutert. Es zeigen:
- Fig. 1: eine Schemadraufsicht auf eine Maschine zum Formen von Behältern,
- Fig. 2: eine perspektivische Schnittdarstellung einer ersten Ausführungsform einer Entkopplung, wie sie in der Maschine gemäß Fig. 1 vorgesehen ist, und
- Fig. 3: eine perspektivische Schnittdarstellung einer zweiten Ausführungsform einer Entkopplung.

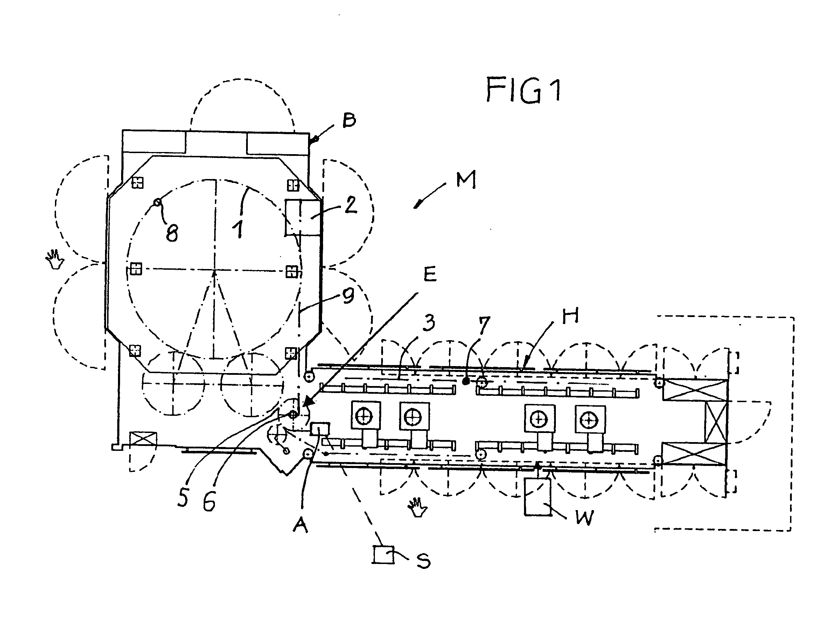

Fig. 1 zeigt in einer Schemadraufsicht eine Maschine M zum Formen von Behältern, beispielsweise eine Blasformmaschine zum kontinuierlichen Blasen oder Streckblasen von Kunststoffflaschen aus Kunststoff-Preforms. Bei der gezeigten Ausführungsform ist ein Blasmodul B funktionell mit einem Heizmodul H gekoppelt, wobei der Heizmodul H einer Temperaturbehandlung (Heizen/Kühlen) unterworfene Preforms zum Blasmodul B zuliefert, die darin zu Behältern geblasen und dann gegebenenfalls einer weiterverarbeitenden Einrichtung zugeliefert werden. Es wäre möglich, mehr als einen Blasmodul B mit einem Heizmodul H zu kombinieren, oder mehrere Heizmodule H mit einem Blasmodul B.

Im Blasmodul B ist ein Rotor 1 durch einen Hauptantrieb 2 entweder permanent oder in einem Taktbetrieb antreibbar. Der Rotor 1 trägt als Garniturenteile beispielsweise Blasformen 8. Der als langgestreckte Station ausgebildete, und an den Blasmodul B angesetzte Heizmodul H enthält einen Transporteur 3, beispielsweise eine Dornkette für Preformgreifer als Garniturenteile 7.

Der Hauptantrieb 2 treibt über einen Antriebsstrang-Teil 9 (z.B. ein Zahnradgetriebe) den Rotor 1 und über eine zunächst nicht betätigte Entkopplung E einen Antriebsstrang-Teil 10 des Transporteurs 3. Die Entkopplung E ist schaltbar, um die Antriebsstrang-Teile 9, 10 entweder miteinander zu kuppeln, oder voneinander zu separieren. Im Normalbetrieb (kontinuierlicher Betrieb) ist die Entkopplung E nicht betätigt, und treibt der Hauptantrieb 2 sowohl den Rotor 1 als auch den Transporteur 3 an. Im Heizmodul H werden mittels des Transporteurs 3 an den Garniturenteilen 7 dabei rotierte Preforms thermisch behandelt, d.h. durch Heiz- und/oder Kühlstationen bewegt, ehe sie in den Blasmodul B transferiert werden.

Im Heizmodul H ist ein Hilfsantrieb A vorgesehen, zweckmäßig bei der Entkopplung E, der bei betätigter Entkopplung E mit dem Transporteur 3 kuppelbar ist. Der Hilfsantrieb A kann an einer anderen, geeigneten Position des Heizmoduls H platziert sein. Das Einschalten und/oder ein Taktbetrieb bzw. Tippbetrieb des Hilfsantriebs A lässt sich beispielsweise über eine tragbare Steuerung S durchführen, die kabelgebunden ist oder drahtlos operiert.

Bei der gezeigten Ausführungsform treibt der Antriebsstrang-Teil 9 vom Hauptantrieb 2 her eine Treibwelle 6, von der ein Antriebsrad 5 für den Transporteur 3 antreibbar ist. Dem Heizmodul H bzw. dem Transporteur 3 kann ein Garniturenteile-Wechselautomat W zugeordnet sein, der bei Taktbetrieb des Transporteurs 3 durch den Hilfsantrieb A die Garniturenteile 7 automatisch wechselt.

Die Entkopplung E ist nicht nur betätigbar, um gleichzeitig und voneinander unabhängig Arbeiten im Blasmodul B und im Heizmodul H durchführen zu können, sondern auch im Fall eines erforderlichen Betriebsstopps des Blasmoduls B, um dann den Transporteur 3 des Heizmoduls H weiterhin durch den Hilfsantrieb A anzutreiben.

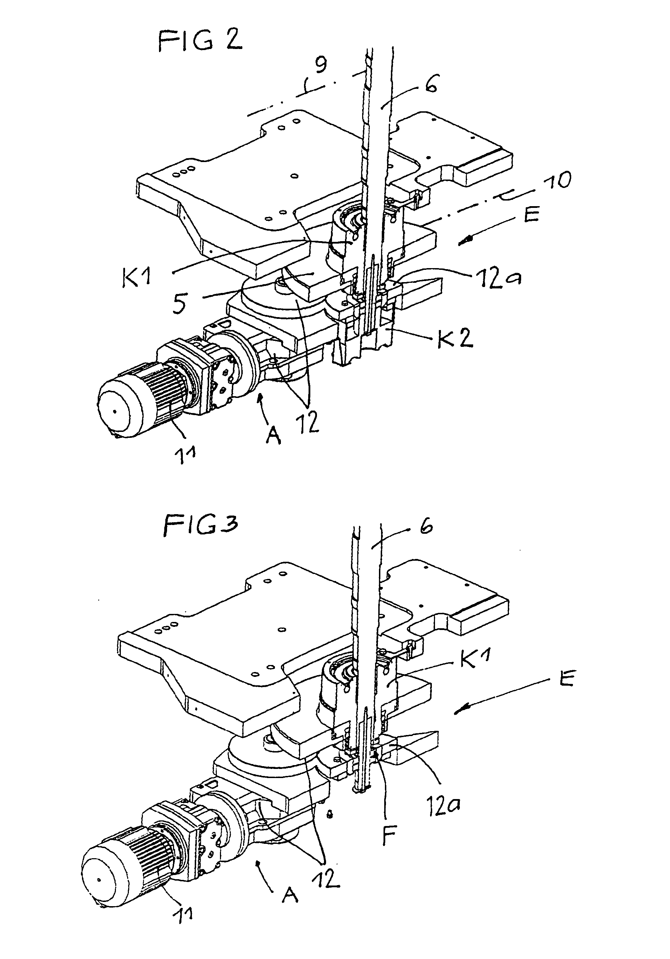

Die Fig. 2 und 3 illustrieren zwei unterschiedliche Ausführungsformen der betätigbaren Entkopplung E. Die Entkopplung E ist zweckmäßig entweder vom Blasmodul B oder vom Heizmodul H her betätigbar, oder wahlweise von beiden, oder alternativ oder additiv auch von einer zentralen Steuerung (nicht gezeigt). Es könnte eine automatische Betätigung der Entkopplung E und der Zuschaltung des Hilfsantriebs A dann erfolgen, wenn z.B. im Blasmodul B oder einer diesem nachgeschalteten Einrichtung ein Notstopp veranlasst wird.

In der Ausführungsform der Entkopplung in Fig. 2 treibt der Antriebsstrang-Teil 9 vom Hauptantrieb 2 her eine Treibwelle 6, die koaxial ein Antriebsrad 5 für den Transporteur 3 (Antriebsstrang-Teil 10) durchsetzt. Zwischen dem Antriebsrad 5 und der Treibwelle 6 ist eine erste Kupplung K1 vorgesehen, die pneumatisch, hydraulisch, elektromagnetisch oder auch mechanisch zwischen einem Einrückzustand und einem Ausrückzustand schaltbar ist.

Einem unteren Ende der Treibwelle 6 ist der Hilfsantrieb A zugeordnet, der einen Elektro- oder Hydromotor 11 und, zweckmäßig, ein Getriebe 12 aufweist, von dem ein Getrieberad 12a das untere Ende der Treibwelle 6 aufnimmt. Zwischen dem Getrieberad 12a und dem Antriebsrad 5 ist eine weitere Kupplung K2 angeordnet, die funktionell der Kupplung K1 entsprechen kann. Die beiden Kupplungen K1 und K2 sind wechselweise schaltbar, d.h., bei eingerückter Kupplung K1 ist die Kupplung K2 ausgerückt, und umgekehrt.

Wird die erste Kupplung K1 ausgerückt, dann sind die Antriebsstrang-Teile 9 und 10 voneinander separiert. Die dann eingerückte andere Kupplung K2 verbindet den Hilfsantrieb A mit dem Antriebsrad 5 und damit dem Antriebsstrang-Teil 10. Ist die erste Kupplung K1 eingerückt, dann sind bei ausgerückter anderer Kupplung K2 die Antriebsstrang-Teile 9, 10 gekuppelt.

In der Ausführungsform in Fig. 3 ist eine einzige, zwischen einem Einrückzustand und einem Ausrückzustand schaltbare Kupplung K1 zwischen dem Antriebsrad 5 und der Treibwelle 6 vorgesehen, um wahlweise die Antriebsstrang-Teile 9, 10 miteinander zu kuppeln oder voneinander zu separieren. Zwischen dem Getrieberad 12a des Getriebes 12 des Hilfsantriebs A und dem Antriebsrad 5 ist ein Freilauf F vorgesehen, der bei eingerückter Kupplung K1 und stehendem Hilfsantrieb A die Drehung der Treibwelle 6 ermöglicht, hingegen bei ausgerückter Kupplung K1 den Hilfsantrieb A mit dem Antriebsrad 5 kuppelt. Es könnten alternativ der Antriebsstrang-Teil 9 mit der Treibwelle 6 und das Antriebsrad 5 mit dem Transporteur 3 verbunden sein.

Bei einer alternativen, nicht gezeigten Ausführungsform könnte der Freilauf F von Fig. 3 auch in das Getriebe 12 des Hilfsantriebs A integriert sein. Bei einer weiteren, nicht gezeigten Alternative könnte der Hilfsantrieb A einen regel- oder verstellbaren Hydromotor 11 aufweisen, der über nur eine Getriebestufe mit der Treibwelle 6 gekuppelt ist und bei eingerückter einziger Kupplung K1 mitgeschleppt wird, wobei der Hydromotor dann so verstellt ist, dass er widerstandsarm bzw. widerstandsfrei mitläuft.

Bei der Variante, bei der der Hilfsantrieb A direkt an die Treibwelle 6 gekoppelt ist, ist es auch denkbar, eine Kupplung K1 oder einen Freilauf F zwischen die Treibwelle 6 und den Hilfsantrieb A anzubringen. Auch denkbar ist eine Ausgestaltung, bei der die Kupplung K1 oder der Freilauf F in der Motor- oder Getriebeeinheit untergebracht ist.

Bei betätigter Entkopplung E lässt sich der Transporteur 3 im Taktbetrieb antreiben, wobei dieser Taktbetrieb korreliert werden kann mit der Operation des zumindest einen Garniturenteil-Wechselautomaten W. Gegebenenfalls wird der Hilfsantrieb A sogar zum Antreiben des Wechselautomaten eingesetzt.

Bei einem Wechsel betroffene Garniturenteile im Rotor 1 des Blasmoduls B könnten die Blasformen oder Teile davon sein. Bei einem Wechsel betroffene Garniturenteile 7 des Transporteurs 3 könnten hingegen Preformgreifer und/oder Abschirmplatten sein. Die Separierung der Antriebsstrang-Teile 9, 10 bei betätigter Entkopplung E bietet den Vorteil, im Blasmodul B und im Heizmodul H bei gleichzeitig ablaufenden Wechselarbeiten jeweils unterschiedliche Positionen anfahren und diese Positionen unabhängig voneinander wählen zu können, und auch die Stillstandszeiten in den jeweiligen Positionen vollständig unabhängig voneinander bedarfsgerecht zu wählen. Ein weiterer Vorteil des Hilfsantriebs A besteht darin, den Transporteur 3 bei stillgesetztem Blasmodul B weiter laufen zu lassen, um Schäden an den Preforms zu vermeiden.

## Patentansprüche

1. Maschine (M) zum Formen von Behältern, insbesondere kontinuierlich geblasenen oder streckgeblasenen Kunststoffflaschen, mit wenigstens einem einen antreibbaren Rotor (1) enthaltenden Blasmodul (B) und wenigstens einem einen antreibbaren Transporteur (3) enthaltenden, dem Blasmodul (B) zuliefernden Heizmodul (H), und einem in einem Antriebsstrang beider Module angeordneten Hauptantrieb (2), der wahlweise entweder im Dauerbetrieb oder im Taktbetrieb betreibbar ist, **dadurch gekennzeichnet, dass** im Antriebsstrang zwischen jeweils dem Rotor (1) und dem Transporteur (3) zugeordneten Antriebsstrang-Teilen (9, 10) eine zum Separieren der Antriebsstrang-Teile (9, 10) wahlweise schaltbare Entkopplung (E) vorgesehen ist, und dass für den bei geschalteter Entkopplung (E) vom Hauptantrieb (2) separierten Antriebsstrang-Teil (10) ein wahlweise zuschaltbarer Hilfsantrieb (A) vorgesehen ist.

2. Maschine gemäß Anspruch 1, **dadurch gekennzeichnet, dass** der Hauptantrieb (2) dem Blasmodul (B) und der Hilfsantrieb (A) dem Heizmodul (H) zugeordnet ist.

3. Maschine gemäß Anspruch 1, **dadurch gekennzeichnet, dass** die Entkopplung (E) entweder zwei wechselweise betätigbare Kupplungen (K1, K2) oder eine einzige betätigbare Kupplung (K1) und einen Freilauf (F) aufweist.

4. Maschine gemäß Anspruch 3, **dadurch gekennzeichnet, dass** die jeweilige Kupplung (K1, K2) pneumatisch, hydraulisch, elektromagnetisch oder mechanisch betätigbar ist.

5. Maschine gemäß Anspruch 1, **dadurch gekennzeichnet, dass** der Hilfsantrieb (A) einen Elektro- oder Hydromotor (11), vorzugsweise mit einem Getriebe (12), aufweist.

6. Maschine gemäß Anspruch 1, **dadurch gekennzeichnet, dass** der Hilfsantrieb (A) im Dauerbetrieb oder im Tanktbetrieb betreibbar ist.

7. Maschine gemäß Anspruch 1, **dadurch gekennzeichnet, dass** in der Entkopplung (E) ein vom mit dem Hauptantrieb (2) verbundenen Antriebsstrang-Teil (9) treibbare Treibwelle (6) für ein Antriebsrad (5) des Transporteurs (3) vorgesehen ist, dass auch der Hilfsantrieb (A) an das Antriebsrad (5) angeschlossen ist und dass zwischen dem Antriebsrad (5) und der Treibwelle (6) eine erste Kupplung (K1) und zwischen dem Hilfsantrieb (A) und dem Antriebsrad (5) eine zweite Kupplung (K2) angeordnet sind.

8. Maschine gemäß Anspruch 1, **dadurch gekennzeichnet, dass** in der Entkopplung (E) ein vom mit dem Hauptantrieb (2) verbundenen Antriebsstrang-Teil (9) treibbare Treibwelle (6) für ein Antriebsrad (5) des Transporteurs (3) vorgesehen ist, dass auch der Hilfsantrieb (A) an das Antriebsrad (5) angeschlossen ist und dass eine einzige Kupplung (K1) zwischen dem Antriebsrad (5) und der Treibwelle (6) und zwischen dem Hilfsantrieb (A) und dem Antriebsrad (5) ein Freilauf (F) angeordnet sind.

9. Maschine gemäß Anspruch 1, **dadurch gekennzeichnet, dass** in der Entkopplung (E) ein vom mit dem Hauptantrieb (2) verbundenen Antriebsstrang-Teil (9) treibbare Treibwelle (6) für ein Antriebsrad (5) des Transporteurs (3) vorgesehen ist, dass auch der Hilfsantrieb (A) an die Treibwelle (6) angeschlossen ist und dass eine Kupplung (K1) zwischen dem Antriebsstrang-Teil (9) und der Treibwelle (6) angeordnet ist.

10. Maschine gemäß Anspruch 1, **dadurch gekennzeichnet, dass** die Entkopplung (E) vom Blasmodul (B) und/oder vom Heizmodul (H) her oder mittels einer zentralen Steuerung betätigbar ist.

11. Maschine gemäß Anspruch 1, **dadurch gekennzeichnet, dass** der Hilfsantrieb (A) über eine tragbare, kabelgebundene oder drahtlose Steuerung (S), vorzugsweise im Taktbetrieb, betreibbar ist.

12. Maschine gemäß wenigstens einem der vorhergehenden Ansprüche, **dadurch gekennzeichnet, dass** dem Heizmodul (H) wenigstens ein Wechselautomat (W) für Garniturenteile (7) des Transporteurs (3) zugeordnet ist, und dass der Wechselautomat (W) zum automatischen Garniturenteilewechsel in Korrelation zum Betrieb des Hilfsantriebs (A) betreibbar ist.

13. Maschine gemäß Anspruch 1, **dadurch gekennzeichnet, dass** der Transporteur (3) eine Dornkette für Preformgreifer aufweist, die bei betätigter Entkopplung (E) vom Hilfsantrieb (A) in einem getakteten Tippbetrieb antreibbar ist.

14. Maschine gemäß Anspruch 1, **dadurch gekennzeichnet, dass** der Hilfsantrieb (A) wahlweise in beiden Drehrichtungen betreibbar ist.

15. Maschine gemäß Anspruch 1, **dadurch gekennzeichnet, dass** der Hilfsantrieb (A) in oder bei der Entkopplung (E) angeordnet ist.
